# EUROPEAN PATENT APPLICATION

(11) **EP 4 512 597 A1**
(43) Date of publication of application: **26.02.2025**
(21) Application number: 24195327.2
(22) Date of filing: 20.08.2024
(51) Int. Cl.: B29C 45/04, B29C 45/14, B29C 45/26, B29C 51/08, B29C 70/46, B32B 5/02, B32B 5/18, B32B 5/24, B32B 27/32, B60R 13/02

(54) **INTERIOR PANEL AND MANUFACTURING METHOD THEREFOR**

(30) Priority: 22.08.2023 CN 202311064214
(71) Applicant: Faurecia (China) Holding Co., Ltd., Shanghai 201109 (CN)
(72) Inventor: JUNCHAO, Pan, Shanghai, 201109 (CN)
(74) Representative: Pfenning, Meinig & Partner mbB

(57) **Abstract**

The present disclosure provides an interior panel and a manufacturing method therefor. And the manufacturing method includes: a panel base part of the interior panel being heated to a first temperature, wherein the panel base part is made of composite material, and matrix of the composite material is a first material, reinforcement of the composite material is a second material, and the first temperature is at least a softening point of the first material; the heated panel base part and a panel surface part being stacked on a first mold for press-molding; wherein, the panel surface part includes a surface side section and a back side section, and the surface side section provides a surface of the interior panel, and the back side section is set to be on back side of the surface side section, and the back side section has a first material component made of first material; and the back side section and the panel base part are connected by the first material component.

## Description

### Field

The present disclosure relates to an interior panel and a manufacturing method therefor.

### Background

Interior panel generally includes a panel base part, and a panel surface part that provides an interior panel surface (i.e., a visible surface), and in the current interior panel manufacturing process, the panel base part and the panel surface part are set to be manufactured by a press-molding process.

But this manufacturing process needs to be further simplified to reduce manufacturing costs.

### Summary

The present disclosure provides a manufacturing method for an interior panel.

The present disclosure provides an interior panel.

The present disclosure provides a manufacturing method for an interior panel according to embodiments of the disclosure. The manufacturing method includes: a panel base part of the interior panel being heated to a first temperature, wherein the panel base part is made of composite material, and matrix of the composite material is a first material, reinforcement of the composite material is a second material, and the first temperature is at least a softening point of the first material; the heated panel base part and a panel surface part being stacked on a first mold for press-molding; wherein, the panel surface part includes a surface side section and a back side section, and the surface side section provides a surface of the interior panel, and the back side section is set to be on back side of the surface side section, and the back side section has a first material component made of first material; and the back side section and the panel base part are connected by the first material component; the first mold on one side and a second mold on other side being close and kept for a first period; and the first mold on one side and the second mold on other side being open, to obtain the interior panel.

Further, in some embodiments of the present disclosure, the first material includes polypropylene (PP), and the second material includes natural fibers and/or synthetic fibers.

Further, in some embodiments of the present disclosure, the first temperature is 40°C-60°C higher than the softening point of the first material.

Further, in some embodiments of the present disclosure, the first mold is a moving mold, and the second mold is a fixed mold, wherein the heated panel base part and the panel surface part being stacked on the moving mold for press-molding, and then the moving mold and the fixed mold being close and kept for the first period.

Further, in some embodiments of the present disclosure, the first mold has a first positioning structure, and the panel surface part, the panel base part respectively have a first positioning hole and a second positioning hole, and when the heated panel base part and the panel surface part are stacked on the first mold, the first positioning hole and the second positioning hole are aligned in the stacked direction, and are positioned in cooperation with the first positioning structure; and the second mold has a second positioning structure, when the first mold and the second mold are close, the first positioning structure matches the second positioning structure.

Further, in some embodiments of the present disclosure, the first mold and the second mold are set on a horizontal injection molding machine.

Further, in some embodiments of the present disclosure, the back side section includes a foam layer and a base layer, and the foam layer is connected with the surface side section, and the base layer is connected with the panel base part, wherein the base layer is of a non-woven fabric configuration, as the first material component, and fibrous material of the non-woven fabric configuration is the first material.

Further, in some embodiments of the present disclosure, the back side section includes a foam layer, and one side of the foam layer is connected to the surface side section, the other side is connected to the back side section, and material of the foam layer includes the first material, so that the foam layer serves as the first material component.

In addition, the present disclosure provides an interior panel according to embodiments of the disclosure, and interior panel is obtained by the above-mentioned manufacturing method, and the interior panel includes: a panel surface part includes a surface side section and a back side section; and the surface side section provides a surface of the interior panel, and the back side section is set to be on back side of the surface side section; a panel base part is made of composite material, and matrix of the composite material is a first material, reinforcement of the composite material is a second material; wherein, the back side section has a first material component made of the first material; and the back side section and the panel base part are connected by the first material component.

Further, in some embodiments of the present disclosure, the back side section and the panel base part are cohesively connected without using binder resin by the first material component.

### Description of attached drawings

The above embodiments of the present disclosure will be better understood after reading the detailed description of the embodiments of the present disclosure in conjunction with the following figures. In the figures, components are not necessarily drawn to scale, and components having similar related features may have the same or similar reference numerals.
Figure 1 is a flow chart diagram of a method of manufacturing an interior panel in accordance with some embodiments of the present disclosure.
Figure 2A is a structural diagram of step S100 of the manufacturing method for the interior panel in accordance with some embodiments of the present disclosure.
Figure 2B is a structural diagram of step S200 of the manufacturing method for the interior panel in accordance with some embodiments of the present disclosure.
Figure 2C is a structural diagram of step S300 of the manufacturing method for the interior panel in accordance with some embodiments of the present disclosure.
Figure 2D is a structural diagram of step S400 of the manufacturing method for the interior panel in accordance with some embodiments of the present disclosure.
Figure 3A, Figure 3B are structural diagrams of panel surface part of the interior panel in accordance with different embodiments of the present disclosure.

Reference numerals:
10-interior panel
1-panel base part
11-surface side section
10 1-surface
12-back side section
13-first positioning hole
121-first material component
122-foam layer
123-base layer
2-panel base part
21-second positioning hole
201-first mold
2011-first positioning structure
202-second mold
2022-second positioning structure
300- IR Oven
400-horizontal injection molding machine

### Detailed Description of Embodiments

Hereinafter, embodiments of the technical solution of the present disclosure will be described in detail with reference to the drawings. And embodiments are merely used to more clearly explain the technical solution of the present disclosure, and therefore are merely examples, and should not limit the scope of protection of the present disclosure.

Unless otherwise defined, all technical and scientific terms used herein have the same meaning as commonly understood by those skilled in the art of the present disclosure. The terms used herein are for the purpose of describing embodiments only and not intended to limit the present disclosure; The terms "including" and "having" and any variations thereof in the specification and claims of the present disclosure and the above description of drawings are intended to cover non-exclusive inclusions.

In the embodiments of the present disclosure, the technical terms "first", "second" and the like are only used to distinguish different objects, and should not be understood to indicate or imply relative importance or implicitly indicate the number, specific order, or primary-secondary relationship of the indicated technical features. In the embodiments of the present disclosure, "a plurality" means two or more unless otherwise explicitly and specifically defined.

An "embodiment" means that a particular feature, structure, or characteristic described may be included in at least one embodiment of the present disclosure. The appearance of the word "embodiment" in various places in the specification does not necessarily refer to the same embodiment, nor refer to an independent or alternative embodiment that is mutually exclusive from other embodiments. It may be explicitly and implicitly understood by those skilled in the art that the embodiments described herein may be combined with other embodiments.

In the embodiments of the present disclosure, the technical terms such as "center", " longitude", " latitude", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the orientation or positional relationships shown in the drawings, and are merely used to facilitate and simplify the description of the embodiments of the present disclosure, and do not indicate or imply that the referred device or element must have a specific orientation, be constructed and operated in a specific orientation, and therefore cannot be understood as a limitation of the embodiments of the present disclosure.

In the embodiments of the present disclosure, unless otherwise explicitly specified and defined, technical terms such as "mounted", "linked", "connected" and "fixed" should be understood in a broad sense, for example, they may be fixed connected, detachable connected, or integrated; It may also be a mechanical connection, and those skilled in the art can understand the specific meanings of the above terms in the embodiments of the present disclosure according to specific circumstances.

It can be understood that flowcharts are used in the present disclosure to illustrate operations of a method for manufacturing a surface component according to embodiments of the present disclosure. It should be understood that, depending on the actual situation, the preceding or following operations are not necessarily performed precisely in order. One can also add additional steps to these operations, or remove a step or steps from them.

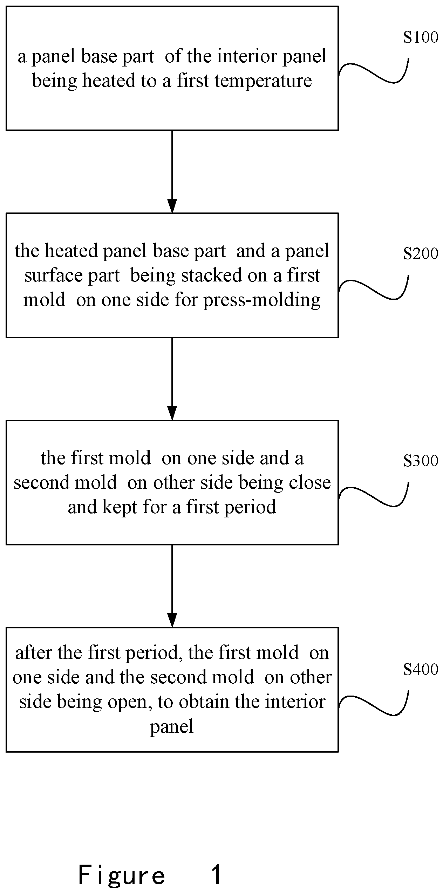

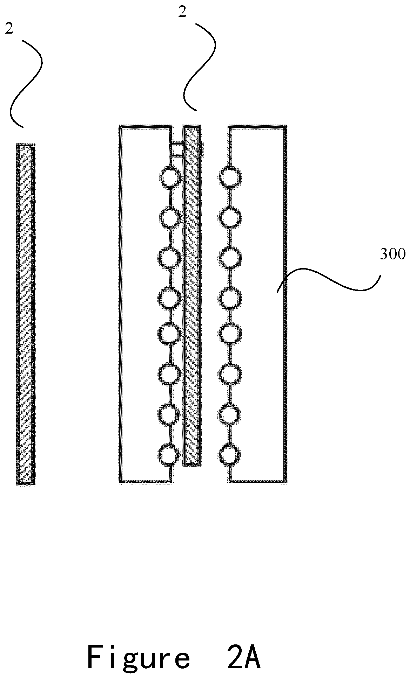

Referring to Fig. 1 and Figs. 2A to 2D, in some embodiments, a manufacturing method for an interior panel 10 includes:
Step S 100: a panel base part 2 of the interior panel 10 being heated to a first temperature.

The interior panel 10 can be an automobile interior part such as a door side panel, a roof lining, a dashboard or a instrument panel, a center console, etc., and the interior panels are in various forms, and have a basic flat profile or a three-dimensional profile, as specified by the relevant specific design, having a convex area and a recessed area, and also have one or more openings and recesses for decorating and operating control pieces as required.

The panel base part 2 provides supporting for a panel surface part 1 of the interior panel, so the panel base part 2 normally has a certain structural strength, and the panel base part 2 is made of composite material, and matrix of the composite material is a first material, reinforcement of the composite material is a second material, the type of the first material can be a common polypropylene (PP) plastic, and the type of the second material can be a natural fiber or a synthetic fiber to form a composite material of fiber reinforced plastic, for example, natural fiber reinforced PP (NFPP), glass fiber reinforced PP (GFPP), rCF-NFPP made of 40% natural fiber, 50% polypropylene and 10% recycled carbon fiber, and NAFILean ^{®} made of natural hemp fiber and PP, etc. In addition, the material of the matrix is not limited to PP, for example, it may also include acryl-butadiene-styrene copolymer (ABS plastic), PC/ABS alloy (ABS engineering plastic), etc.

Natural fiber may include wood fiber, kenaf, hemp, jute, flax, ramie, rattan, soybean, okra (coffee okra), musa, bamboo, coconut, coir, cotton fabric, curaua fiber (pineapple leaf fiber), banana (manila hemp), pine, pineapple, raffia farinifera, and/or sisal.

Synthetic fibers may include, for example, carbon fibers, polyester fibers, acrylic fibers, aramid fibers, Twaron fibers, Kevlar fibers, Technoral fibers, Vinalon fibers, Zylon fibers, and/or polypropylene fibers, etc.

The panel surface part 1 provides a surface 101 of the interior panel 10, as a visible surface, and the surface in the interior panel 10 is facing to the vehicle. The panel surface part 1 includes a surface side section 11 and a back side section 12. The back side in the interior panel 10 is the side facing away from the vehicle. The surface side section 11 provides the surface 101, and the back side section 12 is arranged on the back side of the surface side section 11, and the back side section 12 has a first material component 121 having a first material; and the back side section 12 and the panel base part 2 are connected by the first material component 121.

The material of the surface side section 11 can be adjusted according to the actual needs, for example, the material can normally be polyethylene plastic (PC), polyvinyl chloride plastic (PVC), thermoplastic elastomer (TPE), thermoplastic polyolefin (TPO), polyethylene terephthalate (PET) plastic, etc., but it is not limited by this, for example, it can also be leather, solid wood, stone and other materials, and the choice is made according to actual needs.

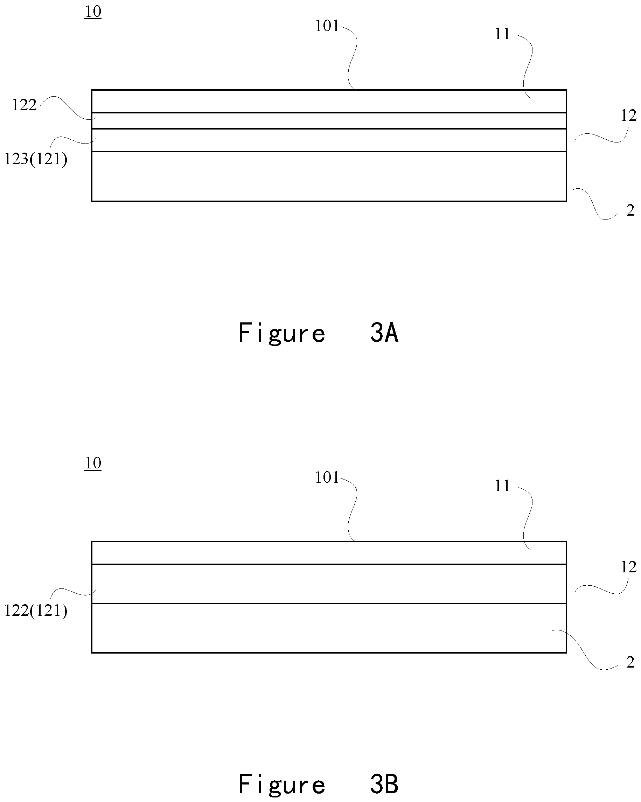

As shown in reference to Figure 3A, in some embodiments, the detailed structure of the back side section 12 can be that, the back side section 12 includes a foam layer 122 and a base layer 123, and the foam layer 122 is connected with the surface side section 11 , and the base layer 123 is connected with the panel base part 2, wherein the base layer 123 is of a non-woven fabric configuration, as the first material component 121, and fibrous material of the non-woven fabric configuration is the first material. For example, when the first material is PP plastic, then the non-woven fabric configuration of the base layer 123 is PP non-woven fabrics. Similarly, if the first material is ABS plastic, the non-woven configuration of the base layer 123 is acrylic non-woven fabrics.

Referring to Figure 3B, in other embodiments, detailed structure of the back side section 12 can only include a foam layer 122, and one side of the foam layer 122 is connected to the surface side section 11, the other side is connected to the back side section 12, and material of the foam layer 122 includes the first material, so that the foam layer 122 serves as the first material component 121, for example, when the first material of the panel base part 2 is PP plastic, then the foam layer 122 is a PP foam layer.

In order to illustrate the hierarchical structure, Figure 3A, Figure 3B use a flat plane structure to illustrate, but this is only schematic, as mentioned above, in the actual interior panel 10, the shape of the interior panel 10 can be flat, curved surface and flat and surface combined, and have structures such as recess, convex, opening structure.

The first temperature is at least the softening temperature of the first material, for example, in the case of PP, the softening temperature is 150 ° C, but it is understandable. As shown in Figure 1, a way of heating can be an infrared oven 300 (IR Oven). In some embodiments, the first temperature is generally 40 °C-60 °C higher than the softening temperature of the first material, for example, for the panel base part 2 is a PP plastic part, then the first temperature is 190 °C-210 °C, so that the softening can be fully, and the heat of the heated panel base part 2 can soften the first material component 121 of the panel surface part 1, so that the two are fused and connected. It can be understood that sufficient softening requires a certain heating time, and the heating time is adjusted according to the specific softening needs.

Using the substrate layer 123 or the foam layer 122 connected with the panel base part 2 can avoid the influence on the surface quality of the surface 101 provided by the surface side section 11, to optimize the visual effect of the interior panel.

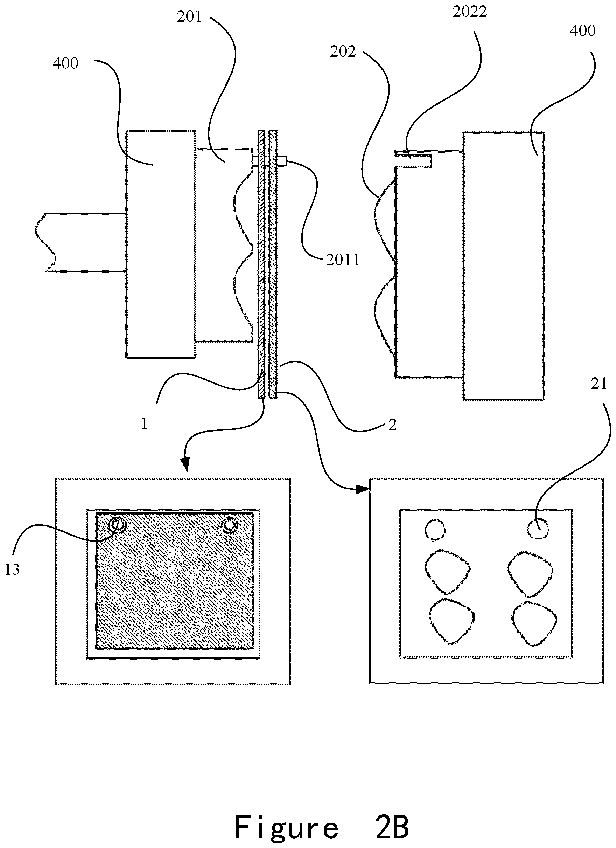

Step S200: as shown in Figure 2B, the heated panel base part 2 and a panel surface part 1 being stacked on a first mold 201 on one side for press-molding.

In some embodiments, as shown in Figure 2B, the first mold 201 on one side has a first positioning structure 2011, and the panel surface part 1 and the panel base part 2 respectively have a first positioning hole 13 and a second positioning hole 21, and when the heated panel base part 2 and the panel surface part 1 are stacked on the first mold 201, the first positioning hole 13 and the second positioning hole 21 are aligned in the stacked direction, and are positioned in cooperation with the first positioning structure 2011; and the second mold 202 on other side has a second positioning structure 2021, and when the first mold 201 and the second mold 202 are close, the first positioning structure 2011 matches the second positioning structure 2022. As shown in Figure 2B, the structure of the first positioning structure 2011 can be a columnar positioning component, such as a positioning pin, and the second positioning structure 2022 can be a corresponding recessed structure, but is not limited by this. In this way, the molding process of the panel base part 2 and the panel surface part 1 can be kept stable, and the molding quality can be further improved.

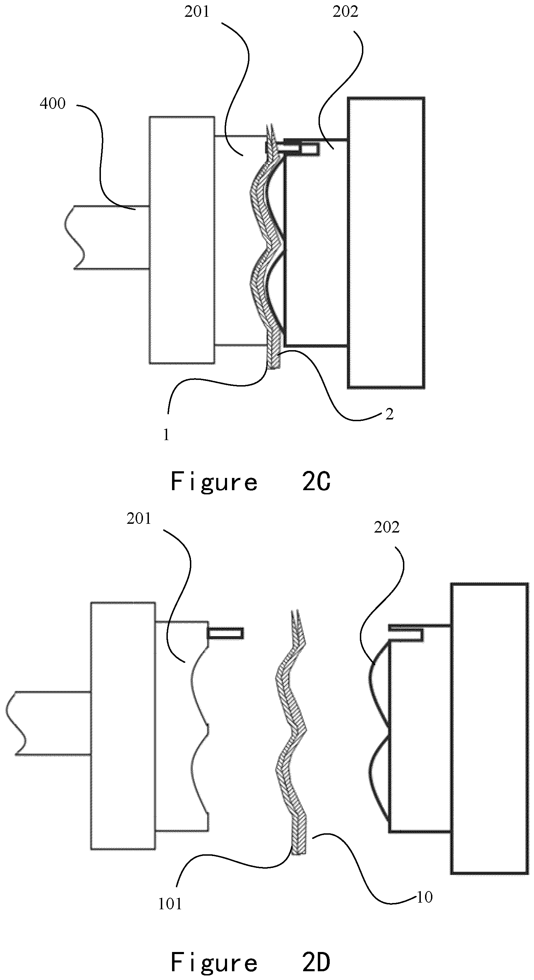

Step S300: As shown in Figure 2C, the first mold 201 on one side and a second mold 202 on other side being close and kept for a first period. In some embodiments, the first mold 201 on one side is a moving mold, and the second mold 202 on the other side is a fixed mold, wherein the heated panel base part 2 and the panel surface part 1 being stacked on the moving mold for press-molding, and then the moving mold and the fixed mold being close and kept for the first period.

Comparing Figure 2A, Figure 2B and Figure 2C, it can be understood that the panel surface part 1 and the panel base part 2 can be pressed together by a clamping force provided by the press-molding, and the panel surface part 1 and the panel base part 2 of a two-dimensional plate structure shown in Figure 2A and Figure 2B form a three-dimensional structure according to the shape of the mold.

The first period for the moving mold and the fixed mold being close can be adjusted according to different situations, which can be obtained through experiments or simulations.

In some embodiments, the first mold 201 and the second mold 202 are set on a horizontal injection molding machine 400, and the corresponding movement and pressure are provided by the horizontal injection molding machine, that is, driving force for the movement and pressure can be provided by utilizing the horizontal injection molding machine for manufacturing panel base part, and there is no need to purchase an additional hot press machine, and the equipment cost of the embodiments is reduced compared with the prior art that needs to specially arrange a hot press machine on the basis of the injection molding equipment.

Step S400: as shown in Figure 2D, after the first period, the first mold 201 on one side and the second mold 202 on other side being open, to obtain the interior panel 10.

The manufacturing method described in the above embodiments, its beneficial effects include, but are not limited to, by heating the panel base part to above the softening temperature before molding, and utilizing the panel base part and the panel surface part to have the same first material, the heated panel base part can heat the panel surface part during molding, and because the soften first material of the two parts makes the panel base part and the panel surface part be stably fused and connected, the two parts only need to be stacked in the mold during press molding, making the manufacturing process simple.

As mentioned above, the interior panel 10 obtained according to the manufacturing method described in the above embodiments includes a panel surface part 1 and a panel base part 2. The panel surface part 1 includes a surface side section 11 and a back side section 12; and the surface side section 11 provides a surface 101 of the interior panel 10, and the back side section 12 is set to be on back side of the surface side section 11. The panel base part 2 is made of composite material, and matrix of the composite material is a first material, reinforcement of the composite material is a second material. And the back side section 12 has a first material component 121 made of the first material; and the back side section 12 and the panel base part 2 are connected by the first material component 121. In some embodiments, because the back side section 12 and the panel base part 2 are cohesively connected without using binder resin by the first material component 121, making the manufacturing process further simplified and and manufacturing cost further reduced.

Although the embodiments of the present disclosure are disclosed as above, they are not used to limit the present disclosure. Therefore, any amendments, equivalent changes and modifications made to the above embodiments according to the essence of the present disclosure without departing from the proposal of the present disclosure fall within the scope of protection defined in the claims of the present disclosure.

## Claims

1. A method for manufacturing an interior panel (10), **characterized in that**, it comprises:
a panel base part (2) of the interior panel (10) being heated to a first temperature, wherein the panel base part (2) is made of composite material, and matrix of the composite material is a first material, reinforcement of the composite material is a second material, and the first temperature is at least a softening point of the first material;
the heated panel base part (2) and a panel surface part (1) being stacked on a first mold (201) for press-molding; wherein, the panel surface part (1) includes a surface side section (11) and a back side section (12), and the surface side section (11) provides a surface (101) of the interior panel (10), and the back side section (12) is set to be on back side of the surface side section (11), and the back side section (12) has a first material component (121) made of first material; and the back side section (12) and the panel base part (2) are connected by the first material component (121);
the first mold (201) on one side and a second mold (202) on other side being close and kept for a first period; and
the first mold (201) on one side and the second mold (202) on other side being open, to obtain the interior panel (10).

2. The method according to claim 1, **characterized in that**, the first material includes polypropylene (PP), and the second material includes natural fibers and/or synthetic fibers.

3. The method according to claim 1, **characterized in that**, the first temperature is 40°C-60°C higher than the softening point of the first material.

4. The method according to claim 1, **characterized in that**, the first mold (201) is a moving mold, and the second mold (202) is a fixed mold, wherein the heated panel base part (2) and the panel surface part (1) being stacked on the moving mold for press-molding, and then the moving mold and the fixed mold being close and kept for the first period.

5. The method according to claim 1, **characterized in that**, the first mold (201) has a first positioning structure (2011), and the panel surface part (1), the panel base part (2) respectively have a first positioning hole (13) and a second positioning hole (21), and when the heated panel base part (2) and the panel surface part (1) are stacked on the first mold (201), the first positioning hole (13) and the second positioning hole (21) are aligned in the stacked direction, and are positioned in cooperation with the first positioning structure (2011); and the second mold (202) has a second positioning structure (2021), when the first mold (201) and the second mold (202) are close, the first positioning structure (2011) matches the second positioning structure (2022).

6. The method according to claim 1, **characterized in that**, the first mold (201) and the second mold (202) are set on a horizontal injection molding machine (400).

7. The method according to claim 1, **characterized in that**, the back side section (12) comprises a foam layer (122) and a base layer (123), and the foam layer (122) is connected with the surface side section (11) , and the base layer (123) is connected with the panel base part (2), wherein the base layer (123) is of a non-woven fabric configuration, as the first material component (121), and fibrous material of the non-woven fabric configuration is the first material.

8. The method according to claim 1, **characterized in that**, the back side section (12) comprises a foam layer (122), and one side of the foam layer (122) is connected to the surface side section (11), the other side is connected to the back side section (12), and material of the foam layer (122) includes the first material, so that the foam layer (122) serves as the first material component (121).

9. An interior panel (10), **characterized in that**, it is obtained by the manufacturing method according to any one of claims 1-8, and the interior panel (10) comprises:
a panel surface part (1) includes a surface side section (11) and a back side section (12); and the surface side section (11) provides a surface (101) of the interior panel (10), and the back side section (12) is set to be on back side of the surface side section (11); and
a panel base part (2) is made of composite material, and matrix of the composite material is a first material, reinforcement of the composite material is a second material;
wherein, the back side section (12) has a first material component (121) made of the first material; and the back side section (12) and the panel base part (2) are connected by the first material component (121).

10. The interior panel (10) according to claim 9, **characterized in that**, the back side section (12) and the panel base part (2) are cohesively connected without using binder resin by the first material component (121).
